(19) Europäisches Patentamt / European Patent Office / Office européen des brevets

(11) **EP 4 068 175 A1**

(12) **EUROPEAN PATENT APPLICATION**
published in accordance with Art. 153(4) EPC

(43) Date of publication:
**05.10.2022 Bulletin 2022/40**

(21) Application number: **20906599.4**

(22) Date of filing: **06.08.2020**

(51) International Patent Classification (IPC):
**G06Q 10/06** (2012.01) **G06Q 10/10** (2012.01)

(86) International application number:
**PCT/KR2020/010393**

(87) International publication number:
**WO 2021/132831 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.12.2019 KR 20190173211**

(71) Applicant: **Crowdworks, Inc.**
**Seoul 06134 (KR)**

(72) Inventors:
• **PARK, Min Woo**
**Seongnam-si, Gyeonggi-do 13626 (KR)**
• **JANG, Jeong Sik**
**Seongnam-si, Gyeonggi-do 13532 (KR)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD FOR INCREASING OR DECREASING NUMBER OF WORKERS AND INSPECTORS IN CROWDSOURCING-BASED PROJECT FOR CREATING ARTIFICIAL INTELLIGENCE LEARNING DATA**

(57) Provided is a method for increasing or decreasing the number of workers and inspectors in a crowdsourcing-based project for creating artificial intelligence learning data. The method comprises the steps of: opening a new crowdsourcing-based project; setting the ratio of the number of inspectors to the number of standard workers of the project; measuring the number of current workers and the number of current inspectors participating in the project; calculating the ratio of the number of inspectors to the number of current workers of the project by using the measurement result; comparing the ratio of the number of inspectors to the number of current workers with the ratio of the number of inspectors to the number of standard workers; and, according to the comparison result, determining the decrease in the inspectors or the increase in the workers and determining the increase of the inspectors or the decrease of the workers.

FIG. 3

- S110 Open new crowdsourcing-based project
- S120 Set standard ratio of number of inspectors to number of workers
- S130 Measure the current number of workers and the current of inspectors
- S140 Calculate current ratio of the current number of inspectors to the current number of workers of project
- S150 Compare current ratio with standard ratio
- S160 Increase or decrease number of workers or inspectors according to comparison result

EP 4 068 175 A1

**Description**

[TECHNICAL FIELD]

Embodiments of the inventive concept described herein relate to creating artificial intelligence learning data, and more particularly, relate to a method for increasing or decreasing the number of workers and the number inspectors in a crowdsourcing-based project.

[BACKGROUND ART]

Recently, there has been an increase in companies which collect and process a large amount of data based on crowdsourcing, which allow the general public to participate in some course of business activity. In other words, a company opens one project to allow the general public, that is, workers and inspectors to participate in the corresponding project, such that the workers perform works and the inspectors perform inspections, thus collecting necessary information (result data).

At this time, because the workers who participate in the project serve to perform works and produce inspection target data, a potential maximum value is determined in productivity of result data of the project according to the number of the workers who participate in the project. Furthermore, because the inspectors who participate in the project serve to inspect the inspection target data and finally produce the result data, a real productivity level of the result data of the project is determined according to the number of the inspectors which participate in the project.

In other words, the productivity of final result data is determined according to the ratio of the number of the inspectors to the number of the workers, who participate in the project.

When the number of workers is relatively greater than the number of inspectors, because bottlenecks occur in the inspection process as the number of inspection target data to be inspected per inspector increases, there is a problem in which restrictions on productivity occur. Furthermore, when the inspection is completed for the work performed by the worker, the work cost is settled. When a bottleneck occurs in the inspection process, the worker's dissatisfaction increases because the worker receives the payment for his or her work later.

Meanwhile, when the number of inspectors is relatively greater than the number of workers, because inspection target data is less than the number of the inspectors, manpower of the inspectors is wasted.

Thus, it is very important to appropriately adjust the number of workers and the number of inspectors, who participate in the project.

[DETAILED DESCRIPTION OF THE INVENTION]

[TECHINICAL PROBLEM]

Embodiments of the inventive concept provide a method for increasing or decreasing the number of workers or inspectors in a crowdsourcing-based project.

The technical problems to be solved by the inventive concept are not limited to the aforementioned problems, and any other technical problems not mentioned herein will be clearly understood from the following description by those skilled in the art to which the inventive concept pertains.

[TECHNICAL SOLUTION]

According to an embodiment, a method for increasing or decreasing the number of workers or inspectors in a crowdsourcing-based project may include opening a new crowdsourcing-based project, setting a standard ratio of the number of inspectors to the number of workers in the project, measuring the current number of workers and the current number of inspectors, the workers and the inspectors participating in the project, calculating a current ratio of the current number of the inspectors to the current number of the workers in the project, using the measured result, comparing the current ratio of the current number of the inspectors to the current number of the workers with the standard ratio of the number of the inspectors to the number of the workers, and determining to decrease the number of the inspectors or increase the number of the workers, when the current ratio of the current number of the inspectors to the current number of the workers is greater than the standard ratio of the number of the inspectors to the number of the workers as a result of the comparison, and determining to increase the number of the inspectors or decrease the number of the workers, when the current ratio of the current number of the inspectors to the current number of the workers is less than the standard ratio of the number of the inspectors to the number of the workers as a result of the comparison.

In some embodiments of the inventive concept, the standard ratio of the number of the inspectors to the number of the workers in the project may be determined using the total number of inspections completed and the total number of works completed, the total numbers being measured during a certain period.

In some embodiments of the inventive concept, the standard ratio of the number of the inspectors to the number of the workers in the project may be a ratio of the average number of works completed during a unit period per worker to the average number of inspections completed during a unit period per inspector, the average numbers being calculated using the total number of the inspections completed and the total number of the works completed, the total numbers being measured during the certain period.

In some embodiments of the inventive concept, the average number of the works completed during the unit period per worker and the average number of the inspections completed during the unit period per inspector may be calculated using the total number of the works completed, the total number of the inspections completed, the certain period, the number of works who participate during the certain period, and the number of inspectors who participate during the certain period.

In some embodiments of the inventive concept, the total number of the works completed may include the number of initial works completed and the number of re-works completed according to return processing based on an inspection result.

In some embodiments of the inventive concept, the total number of the inspections completed may include the number of inspection pass processing and the number of return processing.

In some embodiments of the inventive concept, the measuring of the current number of the workers and the current number of the inspectors, the workers and the inspectors participating in the project, may be repeatedly performed at intervals of a certain period.

In some embodiments of the inventive concept, the method may further include requesting a worker who participate in the project to perform a work and requesting an inspector who participates in the project to inspect a work result of the worker after a certain duration after requesting the worker who participates in the project to perform the work.

In some embodiments of the inventive concept, the method may further include switching roles of some of inspectors who participate in the project from the inspector to the worker, when determining to decrease the number of the inspectors or increase the number of the workers.

In some embodiments of the inventive concept, the method may further include switching roles of some of workers who participate in the project from the worker to the inspector, when determining to increase the number of the inspectors or decrease the number of the workers.

In some embodiments of the inventive concept, the switching of the roles of the some of the workers who participate in the project from the worker to the inspector may include switching a role of a worker having a certain grade among the workers who participate in the project to the inspector.

In some embodiments of the inventive concept, the method may further include determining the target number of people to increase or decrease, using at least one of the current number of the workers who participate in the project, the current number of the inspectors who participate in the project, or the standard ratio of the number of the inspectors to the number of the workers, when increasing or decreasing the number of the workers or the number of the inspectors.

In some embodiments of the inventive concept, the method may further include determining the target number of workers depending on the following equation when increasing or decreasing the number of the workers,

the target number of workers to increase or decrease = (the current number of workers + the current number of inspectors) / (1 + the standard ratio of the number of inspectors to the number of workers).

In some embodiments of the inventive concept, the method may further include determining the target number of inspectors depending on the following equation when increasing or decreasing the number of the inspectors,

the target number of inspectors to increase or decrease = (the current number of workers + the current number of inspectors) / (1 + 1 / the standard ratio of the number of inspectors to the number of workers).

According to an embodiment, a computer program may be combined with a computer which is hardware and may be stored in a computer-readable storage medium to perform the method for increasing or decreasing the number of the workers and the inspectors in the crowdsourcing-based project.

The other details of the inventive concept may be included in the detailed description and the drawings.

[ADVANTAGEOUS EFFECTS OF THE INVENTION]

The above inventive concept may adjust the number of workers and the number of inspectors, who participate in the project, at an appropriate ratio, such that the workers and the inspectors perform an appropriate amount of works and inspections to produce results. Thus, no bottlenecks occur in the inspection process and the settlement of the work of the worker may also be processed immediately.

Furthermore, the above inventive concept may adjust the number of workers and the number of inspectors, who participate in the project, at an appropriate ratio to make a maximum value of productivity of result data determined according to the number of the workers similar to a real productivity level determined according to the number of the inspectors. As a result, the above inventive concept may obtain an effect where the productivity of the project is optimized.

Furthermore, as the workers and the inspectors steadily perform works and inspections, because proficiency of workers and inspectors increases, the above inventive concept may obtain result data with high reliability.

Furthermore, the above inventive concept may calculate an appropriate size of an increase or decrease when increasing or decreasing the number of workers and the number of inspectors, thus having an effect where it is efficient in terms of management.

The effects of the inventive concept are not limited to the above-described effects and other effects which are not described herein will become apparent to those skilled in the art from the following description.

[DESCRIPTION OF THE DRAWINGS]

FIG. 1 is a conceptual diagram of a crowdsourcing service according to an embodiment of the inventive concept;

FIG. 2 is a signal sequence diagram for describing a progress process in a crowdsourcing-based project according to an embodiment of the inventive concept;

FIG. 3 is a flowchart of a method for increasing or decreasing the number of workers and inspectors in a crowdsourcing-based project according to an embodiment of the inventive concept;

FIG. 4 is a flowchart of a method for requesting to perform a work and requesting an inspection according to an embodiment of the inventive concept;

FIG. 5 is a drawing illustrating a timeline when an inspection is requested after a certain duration after requesting to perform a work according to the inventive concept;

FIG. 6 is a drawing illustrating a timeline when a reference ratio of the number of inspectors to the number of workers is set and a current ratio is calculated, when proceeding with a pilot;

FIG. 7 is a drawing illustrating a timeline when a reference ratio of the number of inspectors to the number of workers is set and a current ratio is calculated, when an initial operation duration is applied; and

FIG. 8 is a block diagram of an apparatus for increasing or decreasing the number of workers and inspectors in a crowdsourcing-based project according to an embodiment of the inventive concept.

[BEST MODE]

Advantages, features, and methods of accomplishing the same in the inventive concept will become apparent with reference to embodiments described in detail below together with the accompanying drawings. The inventive concept, however, may be embodied in various different forms, and should not be construed as being limited only to the illustrated embodiments. Rather, these embodiments are provided as examples so that the inventive concept will be thorough and complete, and will fully convey the scope of the inventive concept to those skilled in the art. The inventive concept may be defined by the scope of the claims.

The terms used herein are provided to describe embodiments, not intended to limit the inventive concept. In the specification, the singular forms include plural forms unless particularly mentioned. The expressions "comprise" and/or "comprising" used herein indicate existence of one or more other elements other than stated elements but do not exclude presence of additional elements. Like reference numerals designate like elements throughout the specification, and the term "and/or" may include each of stated elements and one or more combinations of the stated elements. The terms such as "first" and "second" are used to describe various elements, but it is obvious that such elements are not restricted to the above terms. The above terms are used only to distinguish one element from the other. Thus, it is obvious that a first element described hereinafter may be a second element within the technical scope of the inventive concept.

Unless otherwise defined, all terms (including technical and scientific terms) used herein have the same meaning as commonly understood by those skilled in the art to which the inventive concept pertains. Also, terms which are defined in a dictionary and commonly used should be interpreted as not in an idealized or overly formal detect unless expressly so defined.

Hereinafter, an embodiment of the inventive concept will be described in detail with reference to the accompanying drawings.

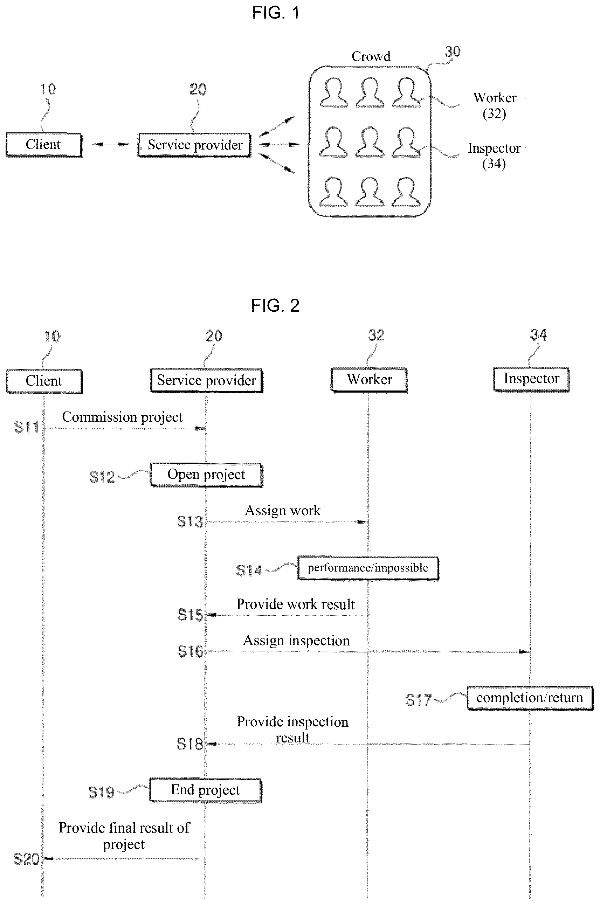

FIG. 1 is a conceptual diagram of a crowdsourcing service according to an embodiment of the inventive concept.

Referring to FIG. 1, the crowdsourcing service may be performed by being composed of a client 10, a service provider 20, and a crowd 30.

The client 10 may refer to a company or an individual who commissions a crowdsourcing-based project (hereinafter, a project).

The client 10 may commission the project for the purpose of source data collection, data annotation, or the like for creating artificial intelligence learning data. The data created by means of the project may be used as learning data of any machine learning such as supervised learning, unsupervised learning, or reinforcement learning. The source data collection may refer to collecting raw data, for example, collecting a recorded voice or collecting a photo. The data annotation may refer to inputting annotation data associated with source data such as text, a photo, or a video. For example, the data annotation may be, but is not limited to, finding an entity from a given text, finding a similar sentence from a given text, or the like. Meanwhile, a type of the above-mentioned project is only an embodiment, and various projects may be handled in the inventive concept according to a design of the client 10.

The service provider 20 may refer to a company which provides the crowdsourcing service.

When the service provider 20 is commissioned for a project for a product or a service from the client 10, it may assign a work for the corresponding project to the crowd 30 and may receive a work result from the crowd 30. Thereafter, the service provider 20 may provide the client 10 with a final product extracted based on the work result.

At this time, the service provider 20 may provide the client 10 and the crowd 30 with the crowdsourcing service by means of a crowdsourcing platform (hereinafter, a platform). In other words, when the service provider 20 is commissioned for the project from the client 10, it may open the project on the platform. Thereafter, when receiving the work result of the opened project from the crowd 30, the service provider 20 may end the project on the platform and may extract and may provide the final product to the client 10.

The crowd 30 may refer to the general crowd who participates in the project opened on the platform. Herein, the crowd 30 may participate the project opened on the platform by means of an application or a website provided by the service provider 20.

The crowd 30 may be composed of a worker 32 and an inspector 34.

The worker 32 may determine to participate in a specific project among a plurality of projects opened on the platform. Thereafter, the worker 32 may perform a work such as source data collection or data annotation and may transmit it to the platform.

The inspector 34 may determine to participate in the specific project among the plurality of projects opened on the platform. Thereafter, the inspector 34 may perform an inspection for the work result performed by the worker 32. The inspector 34 may perform inspection pass processing or return processing, as a result of performing the inspection, and may input a reason for the return when returning the work. When passing the inspection, because there is no need for re-work and re-inspection due to the re-work, the inspection pass may have the same meaning as completion of the inspection.

FIG. 2 is a signal sequence diagram for describing a progress process in a crowdsourcing-based project according to an embodiment of the inventive concept.

First of all, in operation S11, a client 10 may commission one or more projects to a service provider 20.

Thereafter, in operation S12, the service provider 20 may open the commissioned project on a platform. At this time, before opening the project, the service provider 20 may determine a grade with regard to a difficulty of the project or the like. In other words, the service provider 20 may determine whether to expose the project to a crowd 30 of a certain grade or more depending on the difficulty. Thus, the service provider 20 may enhance the reliability of the work result of the project.

Thereafter, in operation S13, the service provider 20 may assign a work to a worker 32 of the grade or more depending on the corresponding grade of the project.

Thereafter, in operation S14, the worker 32 may perform the assigned work. At this time, the worker 32 may fail to perform the work it is impossible to perform for some reason and may input a reason why it is impossible to perform the work.

Thereafter, in operation S15, the service provider 20 may receive a work result from the worker 32. In operation S16, the service provider 20 may assign an inspection for the corresponding work result to an inspector 34.

Thereafter, in operation S17, the inspector 34 may perform the assigned inspection. At this time, when it is determined that the work is correctly performed, the inspector 34 may determine that the inspection is completed. When it is determined that the inspection work is incorrectly performed, the inspector 34 may determine return. When determining the return, the inspector 34 may input a reason for the return about whether it is determined that the work is incorrectly performed for a certain reason.

Thereafter, in operation S18, the service provider 20 may receive the inspection result from the inspector 34.

When the inspection result is the completion of the inspection, the service provider 20 may extract a final product when the project is ended, based on it, by using the corresponding work result as valid data.

When the inspection result is return processing, the service provider 20 may internally perform an inspection again or may assign a work to the worker 32 again such that the worker 32 performs the work.

Thereafter, when the project duration is ended or when ensuring sufficient valid data, in operation S19, the service provider 20 may end the corresponding project. In operation S20, the service provider 20 may calculate a final result based on the ensured valid data and may provide the client 10 with the final result.

At this time, before ending the project, the service provider 20 may evaluate the results performed by the worker 32 and the inspector 34 and may calculate the cost of work and the cost of inspection depending on the evaluation to pay the worker 32 and the inspector 34 the cost of work and the cost of inspection.

Meanwhile, components are simply represented as the client 10, the service provider 20, the worker 32, and the inspector 34 in FIGS. 1 and 2, but they may refer to computer devices or electric communication devices such as a smartphone, a tablet, a PDA, a laptop, a desktop, and a server operated by each participant.

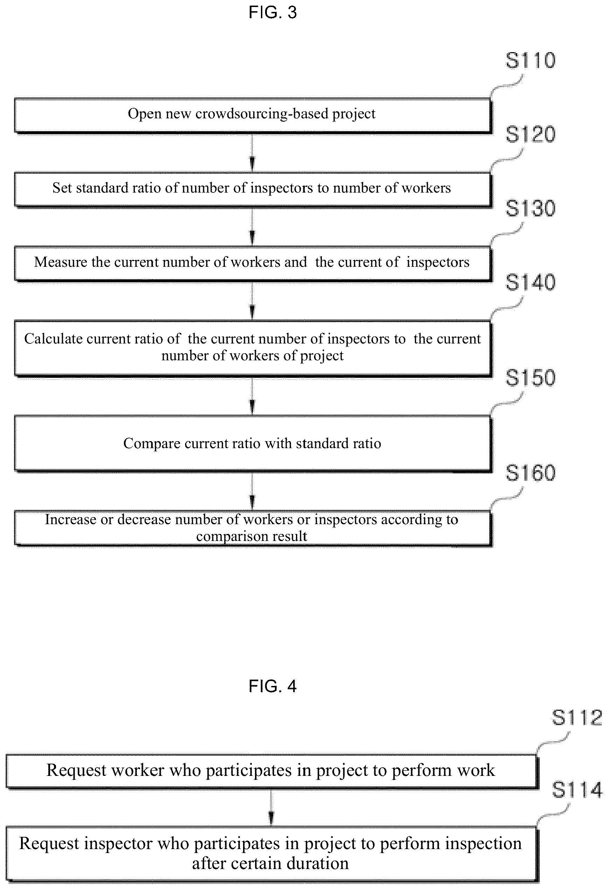

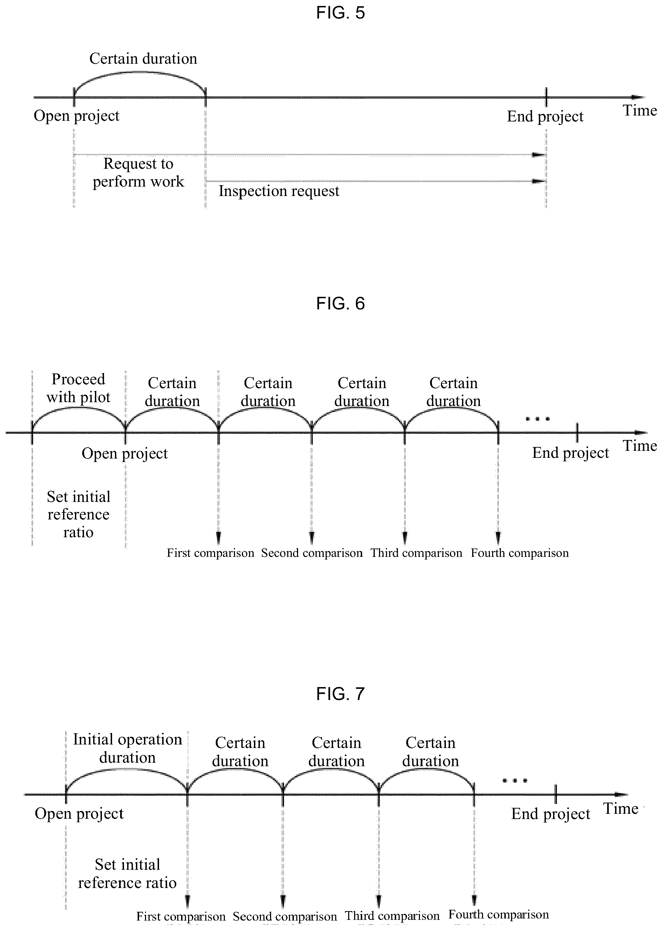

FIG. 3 is a flowchart of a method for increasing or decreasing the number of workers and inspectors in a crowdsourcing-based project according to an embodiment of the inventive concept. FIG. 4 is a flowchart of a method for requesting to perform a work and requesting an inspection according to an embodiment of the inventive concept. FIG. 5 is a drawing illustrating a timeline when an inspection is requested after a certain duration after requesting to perform a work according to the inventive concept. FIG. 6 is a drawing illustrating a timeline when a reference ratio of the number of inspectors to the number of workers is set and a current ratio is calculated, when proceeding with a pilot. FIG. 7 is a drawing illustrating a timeline when a reference ratio of the number of inspectors to the number of workers is set and a current ratio is calculated, when an initial operation duration is applied.

Meanwhile, operations shown in FIGS. 3 and 4 may be understood as being performed by a platform server (hereinafter, a server) operated by a service provider 20.

Furthermore, a worker 32 or an inspector 34 may perform a work or an inspection using a certain terminal device. The terminal device of the worker 32 or the inspector 34 may be, but is not limited to, a computer device or an electric communication device such as a smartphone, a tablet, a PDA, a laptop, or a desktop.

Referring to FIG. 3, in operation S110, a server may open a new crowdsourcing-based project. When the project is opened, the plurality of workers 32 and the plurality of inspectors 34 may start works and inspections depending to the request of the server.

Referring to FIG. 4, in operation S112, as the project is opened, the server may request the worker 32 who participates in the project to perform the work. Then, each of the plurality of workers 32 who participate in the project may perform the work and may transmit the work result to the server. Next, as shown in FIG. 5, after a certain duration elapses, in operation S114, the server may request the plurality of inspectors 34 who participate in the project to inspect the work results of the plurality of workers 32. Then, each of the plurality of inspectors 34 who participate in the project may perform the inspection and may transmit the inspection result to the server.

The certain duration may refer to a leading time when the inspector 34 collects the work result for inspection and may be predetermined by the server. In other words, when the certain duration is preset to one day and when the project is opened, the server may receive and collect a sufficient amount of work results from the worker 32 for a day and may request the inspector 34 to inspect the collected work results after the day such that the inspector 34 starts the inspection. At this time, as the role of the inspector 34 is enabled when the certain duration elapses while being disabled during the certain duration, the inspector 34 may participate in the project.

When the worker 32 and the inspector 34 perform the work and the inspection at the same time without the leading time, because it takes a time until the work results are sufficiently collected, manpower of some inspectors 34 may be wasted. That is why a certain time interval between the time when the work is started in the project and the time when the inspection is started in the project is given such that the work results are sufficiently collected.

Referring again to FIG. 3, in operation S120, the server may set a standard ratio of the number of inspectors to the number of workers in the project.

The standard ratio of the number of the inspectors to the number of workers may be a value indicating the suitable ratio of the number of inspectors to the number of workers when considering productivity as described below.

In an embodiment, the standard ratio of the number of the inspectors to the number of workers may be determined using the total number of inspections completed and the total number of works completed, which are measured during a certain period. The total number of the works completed and the total number of the inspections completed may be repeatedly measured at intervals of the certain period. The standard ratio of the number of the inspectors to the number of the workers may be updated at intervals of the certain period.

In detail, the standard ratio R of the number of inspectors to the number of workers may refer to the ratio W/C of the average number W of works completed during a unit period per worker to the average number C of inspections completed during a unit period per inspector, which are calculated using the total number of the inspections completed and the total number of the works completed, which are measured during the certain period. For example, the unit period is, but is not limited to, one day.

Herein, the average number W of the works completed during the unit period per worker may be calculated using the total number of the works completed, which is measured during the certain period, the certain period, and the number or workers who participate during the certain period.

The average number C of the inspections completed during the unit period per inspector may be calculated using the total number of the inspections completed, which is measured during the certain period, the certain period, and the number or inspectors who participate during the certain period.

For example, when the certain period is preset to two days, when the number of workers who participate in the project for two days to perform the work, when the total number of works completed, which is measured for two days, is 200, when the number of inspectors who participate in the project for two days to perform the inspection is 10, and when the total number of inspections completed, which is measured for two days, is 200, the average number W of works completed during the unit period per worker is calculated as 5 (= 200/2/20) and the average number C of inspections completed during the unit period per inspector is calculated as 10 (= 200/2/10). This means that an average of five works is completed per day per worker during the certain period and that an average of 10 inspections is completed per day per inspector during the certain period. Next, the standard ratio R of the number of inspectors to the number of workers is determined as 1/2.

It may be seen that the speed of performing the role of the inspector per unit period is faster from it.

It may be seen that the speed of performing the role of the inspector per unit period is faster, based on the calculated result described above. This means that the ratio of the number of workers to the number of inspectors is not appropriate. Thus, the number of workers and the number of inspectors may be suitably adjusted from the ratio W/C of the average number W of works completed during the unit period per worker to the average number C of inspections completed during the unit period per inspector.

The total number of the works completed may include the number of initial works completed and the number of re-works completed according to return processing based on the result of the inspection. In other words, the total number of the works completed may be calculated by including both the number of works completed initially by workers during the certain period and the number of re-works completed for the work returned by the inspector.

The total number of the inspections completed may include the number of inspection pass processing and the number of return processing. In other words, the total number of the inspections completed may be calculated by including both the number of inspection pass processing with respect to corresponding work data by inspectors as the inspectors determine that the work result by the worker is normal and the number of return processing by the inspectors as the inspectors determine that the work result is inappropriate and a re-work is needed.

The certain period may be set to an appropriate duration according to the nature or difficulty of the project. In other words, because the worker or the inspector becomes skilled in a simple work or a work with low difficulty as the project proceeds, the worker and the inspector may perform their respective roles at a similar speed after a specific time point. Thus, the period may be set to be relatively long (e.g., one week) in such a project. It may be identified whether the worker and the inspector perform their respective roles at a similar speed during the period.

Meanwhile, as described above, the initial standard ratio of the number of inspectors to the number of workers may be preset according to the result of the pilot which proceeds before the project is opened or may be preset according to the result where the project proceeds during an initial operation period after the project is opened, rather than being set every certain period.

As another example, refer to FIG. 6, the server may perform a pilot before the project is opened and may set the initial standard ratio of the number of inspectors to the number of workers using the total number of works completed and the total number of inspections completed, which are measured during the pilot. The server should a criterion using the number of works completed and the number of inspections completed, which are measured during the same duration. For example, when the pilot duration is two days, the pilot should be operated to perform the work of the worker for a day in the first half of the two days and should be operated to perform the inspection of the inspector for a day in the second half of the two days. Because the detailed calculation method is the same as that described above, it will be omitted.

As another example, refer to FIG. 7, the server may set the initial standard ratio of the number of inspectors to the number of workers using the total number of works completed and the total number of inspections completed, which are measured during an initial operation duration after the project is opened.

Herein, the initial operation duration may refer to a duration when a certain duration is added to a duration corresponding to the certain period. In other words, the initial operation duration may be set to be longer than the certain period. For example, when the certain duration predetermined by the server is one day and when the certain period is two days, the initial operation duration may be set to three days. Meanwhile, because the inspector 34 starts an inspection later than the worker 32 by the certain duration, a leading time of a day is assigned. The server should a criterion using the number of works completed and the number of inspections completed, which are measured during the same duration. Thus, the server may set the initial standard ratio of the number of inspectors to the number of workers using only the number of works completed and the number of inspections completed, which are measured for two days in the second half corresponding to the certain period during the initial operation duration of three days. Because the detailed calculation method is the same as that described above, it will be omitted.

As another example, the standard ratio of the number of inspectors to the number of workers may not be updated at intervals of a certain period, and the initial standard ratio of the number of the inspectors to the number of the workers, which is described above, may be fixed continuously while the project is in progress.

Referring again to FIG. 3, in operation S130, the server may measure the current number of works and the current number of inspectors, who participate in the project.

The server may repeatedly perform the measurement of the current number WN of workers and the current number CN of inspectors, who participate in the project, at intervals of the certain period. In other words, the server may set the standard ratio of the number of inspectors to the number of workers every certain period and may measure the number of workers who participate in the project at a current time and the current number of inspectors. Next, as described below, the server may determine to increase or decrease the number of works or inspectors by means of the result of a comparison between the two.

Referring again to FIG. 3, in operation S140, the server may calculate the current ratio CN/WN of the current number of inspectors to the current number of workers in the project, using the measured result.

For example, when the number of workers who participate in the project at a time when a specific period is reached is measured as 30 and when the number of inspectors is measured as 10, the current ratio of the current number of inspectors to the current number of workers is calculated as 1/3 (= 10/30).

Referring again to FIG. 3, in operation S150, the server may compare the current ratio of the current number of the inspectors to the current number of the workers with the standard ratio of the number of the inspectors to the number of the workers.

As an embodiment, when the initial standard ratio of the number of inspectors to the number of workers is preset by means of the pilot, referring to FIG. 6, the server may perform a comparison (a first comparison) between the initial standard ratio of the number of the inspectors to the number of the workers and the current ratio of the current number of the inspectors to the current number of the workers after the certain duration elapses. At this time, the reason for the comparison after the certain duration elapses is to measure the current number of workers and the current number of inspectors after the inspectors as well as the workers are sufficiently introduced during the certain duration.

After performing the first comparison at a time when the certain duration elapses, the server may repeatedly perform a second comparison, a third comparison, ..., and an nth comparison every certain period until the project is ended.

As another example, when the project proceeds during the initial operation duration and the standard ratio of the number of inspectors to the number of workers is preset, referring to FIG. 7, the server may perform the comparison (the first comparison) between the initial standard ratio of the number of inspectors to the number of workers and the current ratio of the current number of inspectors to the current number of workers after the initial operation duration elapses. At this time, because the initial operation duration is a duration including the certain duration, workers and inspectors are sufficiently introduced during the initial operation duration.

After performing the first comparison at a time when the initial operation duration elapses, the server may repeatedly perform a second comparison, a third comparison, ..., and an nth comparison every certain period until the project is ended.

Referring again to FIG. 3, in operation S160, the server may increase or decrease the number of workers or the number of inspectors, depending on the compared result.

As an embodiment, when the current ratio of the current number of the inspectors to the current number of the workers is greater than the standard ratio of the number of the inspectors to the number of the workers, the server may determine to decrease the number of inspectors or increase the number of workers. In other words, because that the current ratio of the current number of the inspectors to the current number of the workers is greater than the standard ratio of the number of the inspectors to the number of the workers means that the current ratio of the current number of the inspectors to the current number of the workers is greater than an appropriate ratio, the server may increase or decrease and adjust the number of inspectors or the number of workers in response to the appropriate ratio.

For example, when the current ratio of the current number of inspectors to the current number of workers is 1.5 at the time when the specific period is reached and when the standard ratio of the number of inspectors to the number of workers is 1, the server may decrease the number of inspectors or may increase the number of workers, in response to the appropriate ratio of 1.

At this time, the server may switch roles of some of the inspectors who participate in the project from the inspector to the worker, thus increasing the number of workers at the same time as decreasing the number of inspectors. Thus, the server may increase or decrease the number of workers and the number of inspectors in the project by switching roles of some inspectors who participate in the project to the worker without recruiting new third-party workers and inspectors out of the project.

As another embodiment, when the current ratio of the current number of the inspectors to the current number of the workers is less than the standard ratio of the number of the inspectors to the number of the workers, the server may determine to increase the number of inspectors or decrease the number of workers. In other words, because that the current ratio of the current number of the inspectors to the current number of the workers is less than the standard ratio of the number of the inspectors to the number of the workers means that the current ratio of the current number of the inspectors to the current number of the workers is less than the appropriate ratio, the server may appropriately increase or decrease and adjust the number of inspectors or the number of workers in response to the appropriate ratio.

For example, when the current ratio of the current number of inspectors to the current number of workers is 1.5 at the time when the specific period is reached and when the standard ratio of the number of inspectors to the number of workers is 2, the server may increase the number of inspectors or may decrease the number of workers, in response to the appropriate ratio of 2.

At this time, the server may switch roles of some of the workers who participate in the project from the worker to the inspector, thus decreasing the number of workers at the same time as increasing the number of inspectors. In detail, the server may switch a role of a worker having a certain grade (or a worker with sufficient proficiency in performing the work and a low rate of return) among the workers who participate in the project to the inspector. Thus, the server may increase or decrease the number of workers and the number of inspectors in the project by switching roles of some inspectors who participate in the project to the inspector without recruiting new third-party workers and inspectors out of the project.

As an embodiment, the server may recruit new third-party workers or inspectors who do not participate in the project at the same time while switching roles of some of the inspectors who participate in the project from the inspector to the worker or switching roles of some of the workers who participate in the project from the worker to the inspector. Alternatively, new third-party workers or inspectors who do not participate in the project may not be recruited without switching the role.

Meanwhile, when increasing or decreasing the number of workers or the number of inspectors, the server may determine the target number of people to increase or decrease, using at least one of the current number of workers who participate in the project, the current number of inspectors, or the standard ratio of the number of inspectors to the number of workers.

As an embodiment, the target number of workers when increasing or decreasing workers may be determined according to the following equation,

[Equation 1]

$$\text{the target number of workers to increase or decrease} = (\text{the current number of workers} + \text{the current number of inspectors}) / (1 + \text{the standard ratio of the number of inspectors to the number of workers}).$$

For example, when the current number of workers measured at the time when the specific period is reached is 10, when the current number of inspectors is 20, and when the standard ratio of the number of inspectors to the number of workers is 1.5, as the target number of workers to increase or decrease is calculated as 12 (= (10+20)/(1+1.5)), the server may increase the number of workers by two.

On the other hand, when the current number of workers measured at the time when the specific period is reached is 10, when the current number of inspectors is 10, and when the standard ratio of the number of inspectors to the number of workers is 1.5, as the target number of workers to increase or decrease is calculated as 8 (= (10+10)/(1+1.5)), the server may decrease the number of workers by two.

As another embodiment, the target number of inspectors when increasing or decreasing inspectors may be determined according to the following equation,

[Equation 2]

$$\text{the target number of inspectors to increase or decrease} = (\text{the current number of workers} + \text{the current number of inspectors}) / (1 + 1 / \text{the standard ratio of the number of inspectors to the number of workers})$$

For example, when the current number of workers measured at the time when the specific period is reached is 10, when the current number of inspectors is 20, and when the standard ratio of the number of inspectors to the number of workers is 1.5, as the target number of inspectors to increase or decrease is calculated as 18 (= (10+20)/(1 +1/1.5)), the server may determine to decrease the number of inspectors by two. In other words, the server may switch two of 20 current inspectors to workers, thus increasing the number of workers at the same time as decreasing the number of inspectors.

On the other hand, when the current number of workers measured at the time when the specific period is reached is 10, when the current number of inspectors is 10, and when the standard ratio of the number of inspectors to the number of workers is 1.5, as the target number of inspectors to increase or decrease is calculated as 12 (= (10+10)/(1+1/1.5)), the server may determine to increase the number of inspectors by two. In other words, the server may switch two of 10 current workers to inspectors, thus decreasing the number of workers at the same time as increasing the number of inspectors.

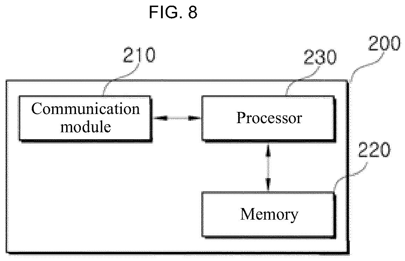

Meanwhile, in the above-mentioned description, operations S110 to S160 may be further divided into additional operations or may be combined into fewer operations, according to an implementation example of the inventive concept. Furthermore, some operations may be omitted if necessary, and an order between operations may be changed. In addition, although there are other omitted contents, the above-mentioned contents of FIG. 8 described below are also applicable to the method for increasing or decreasing the number of workers and inspectors in the crowdsourcing-based project in FIGS. 1 to 7.

Hereinafter, a description will be given of an apparatus 200 for increasing or decreasing the number of workers and inspectors in a crowdsourcing-based project according to an embodiment of the inventive concept with referring to FIG. 8.

FIG. 8 is a block diagram of an apparatus for increasing or decreasing the number of workers and inspectors in a crowdsourcing-based project according to an embodiment of the inventive concept.

Referring to FIG. 8, an apparatus 200 for increasing or decreasing the number of workers and inspectors in a crowdsourcing-based project (hereinafter referred to as an "increasing or decreasing apparatus") may include a communication module 210, a memory 220, and a processor 230.

The communication module 210 may transmit crowdsourcing-based works for one project to a plurality of workers 32 to request the plurality of workers 32 to perform the works and may receive the work results from the plurality of workers 32. Furthermore, the communication module 210 may transmit the work results, received from the plurality of workers 32, to a plurality of inspectors 34 to request the plurality of inspectors 34 to inspect the work results and may receive inspection results from the plurality of inspectors 34.

The memory 220 may store a computer program for increasing or decreasing the number of workers and inspectors, who participate in one project, based on data received from the communication module 210.

The processor 230 may execute the computer program stored in the memory 220. The computer program may include instructions for executing the above-mentioned method for increasing or decreasing the number of workers and inspectors in the crowdsourcing-based project. By executing the program stored in the memory 220, the processor 230 may compare the standard ratio of the number of inspectors to the number of workers with the current ratio of the current number of inspectors to the current number of workers every certain period and may increase or decrease and adjust the number of workers or the number of inspectors depending on the compared result, such that the workers and the inspectors perform their respective roles at an appropriate ratio.

The increasing or decreasing apparatus 200 described with reference to FIG. 8 may be provided as a component of the above-mentioned server.

The above-mentioned method for increasing or decreasing the number of the workers and the inspectors in the crowdsourcing-based project according to an embodiment of the inventive concept may be combined with a computer which is hardware and may be stored in a computer-readable storage medium to be implemented as a program (or application) to be executed.

For the computer to read the program and execute the methods implemented with the program, the above-mentioned program may include a code coded into a computer language such as C, C++, Java, or a machine language readable through a device interface of the computer by a processor (CPU) of the computer. Such a code may include a functional code associated with a function and the like defining functions necessary for executing the methods and may include a control code associated with an execution procedure necessary for the processor of the computer to execute the functions according to a procedure. Further, such a code may further include a code associated with memory reference about whether additional information or media necessary for the processor of the computer to execute the functions is referred at any location (address number) of an internal or external memory of the computer. Further, if it is necessary for the processor of the computer to communicate with any computer or server located in a remote place to execute the functions, the code may further include a communication related code about how communication is performed with any computer or server located in a remote place using a communication module of the computer and whether to transmit and receive any information or media upon communication.

The medium may refer to a device-readable medium which stores data on a semipermanent basis rather than a medium, such as a register, a cache, or a memory, which stores data during a short moment. The medium may refer to a device-readable medium which stores data on a semipermanent basis rather than a medium, such as a register, a cache, or a memory, which stores data during a short moment. In other words, the program may be stored in various storage media on various servers accessible by the computer or various storage media on the computer of the user. Further, the medium may be distributed to a computer system connected over a network and may store a computer-readable code on a distributed basis.

While the inventive concept has been described with reference to exemplary embodiments, it will be apparent to those skilled in the art that various changes and modifications may be made without departing from the spirit and scope of the inventive concept. Therefore, the embodiments described above are provided by way of example in all aspects, and should be construed not to be restrictive.

**Claims**

1.  A method for increasing or decreasing the number of workers and inspectors in a crowdsourcing-based project, the method being implemented by a computer and comprising:

    opening a new crowdsourcing-based project;
    setting a standard ratio of the number of inspectors to the number of workers in the project;
    measuring the current number of workers and the current number of inspectors, the workers and the inspectors participating in the project;
    calculating a current ratio of the current number of the inspectors to the current number of the workers in the project, using the measured result;
    comparing the current ratio of the current number of the inspectors to the current number of the workers with the standard ratio of the number of the inspectors to the number of the workers; and
    determining to decrease the number of the inspectors or increase the number of the workers, when the current ratio of the current number of the inspectors to the current number of the workers is greater than the standard ratio of the number of the inspectors to the number of the workers as a result of the comparison, and determining to increase the number of the inspectors or decrease the number of the workers, when the current ratio of the current number of the inspectors to the current number of the workers is less than the standard ratio of the number of the inspectors to the number of the workers as a result of the comparison.

2.  The method of claim 1, wherein the standard ratio of the number of the inspectors to the number of the workers in the project is determined using the total number of inspections completed and the total number of works completed, the total numbers being measured during a certain period.

3.  The method of claim 2, wherein the standard ratio of the number of the inspectors to the number of the workers in the project is a ratio of the average number of works completed during a unit period per worker to the average number of inspections completed during a unit period per inspector, the average numbers being calculated using the total number of the inspections completed and the total number of the works completed, the total numbers being measured during the certain period.

4.  The method of claim 3, wherein the average number of the works completed during the unit period per worker and the average number of the inspections completed during the unit period per inspector are calculated using the total number of the works completed, the total number of the inspections completed, the certain period, the number of works who participate during the certain period, and the number of inspectors who participate during the certain period.

5.  The method of claim 2, wherein the total number of the works completed includes the number of initial works completed and the number of re-works completed according to return processing based on an inspection result.

6.  The method of claim 2, wherein the total number of the inspections completed includes the number of inspection pass processing and the number of return processing.

7.  The method of claim 1, wherein the measuring of the current number of the workers and the current number of the inspectors, the workers and the inspectors participating in the project, is repeatedly performed at intervals of a certain period.

8.  The method of claim 1, further comprising:

    requesting a worker who participate in the project to perform a work; and
    requesting an inspector who participates in the project to inspect a work result of the worker after a certain duration after requesting the worker who participates in the project to perform the work.

9.  The method of claim 1, further comprising:
    switching roles of some of inspectors who participate in the project from the inspector to the worker, when determining to decrease the number of the inspectors or increase the number of the workers.

10. The method of claim 1, further comprising:
    switching roles of some of workers who participate in the project from the worker to the inspector, when determining to increase the number of the inspectors or decrease the number of the workers.

11. The method of claim 10, wherein the switching of the roles of the some of the workers who participate in the project from the worker to the inspector includes:
switching a role of a worker having a certain grade among the workers who participate in the project to the inspector.

12. The method of claim 1, further comprising:
determining the target number of people to increase or decrease, using at least one of the current number of the workers who participate in the project, the current number of the inspectors who participate in the project, or the standard ratio of the number of the inspectors to the number of the workers, when increasing or decreasing the number of the workers or the number of the inspectors.

13. The method of claim 1, further comprising:

determining the target number of workers depending on the following equation when increasing or decreasing the number of the workers,
the target number of workers to increase or decrease = (the current number of workers + the current number of inspectors) / (1 + the standard ratio of the number of inspectors to the number of workers).

14. The method of claim 1, further comprising:

determining the target number of inspectors depending on the following equation when increasing or decreasing the number of the inspectors,
the target number of inspectors to increase or decrease = (the current number of workers + the current number of inspectors) / (1 + 1 / the standard ratio of the number of inspectors to the number of workers).

15. A computer program being combined with a computer and being stored in a computer-readable storage medium to perform the method for increasing or decreasing the number of the workers and the inspectors in the crowdsourcing-based project of any one of claims 1-14.

FIG. 1

Crowd 30

Worker (32)

Inspector (34)

10 Client

20 Service provider

FIG. 2

| 10 Client | 20 Service provider | 32 Worker | 34 Inspector |

S11 Commission project

S12 Open project

S13 Assign work

S14 performance/impossible

S15 Provide work result

S16 Assign inspection

S17 completion/return

S18 Provide inspection result

S19 End project

S20 Provide final result of project

FIG. 3

S110

| Open new crowdsourcing-based project |

S120

| Set standard ratio of number of inspectors to number of workers |

S130

| Measure the current number of workers and the current of inspectors |

S140

| Calculate current ratio of the current number of inspectors to the current number of workers of project |

S150

| Compare current ratio with standard ratio |

S160

| Increase or decrease number of workers or inspectors according to comparison result |

FIG. 4

S112

| Request worker who participates in project to perform work |

S114

| Request inspector who participates in project to perform inspection after certain duration |

FIG. 5

Certain duration

Open project                                       End project    Time

Request to perform work

Inspection request

FIG. 6

Proceed with pilot     Certain duration     Certain duration     Certain duration     Certain duration    ...

Open project                                       End project    Time

Set initial reference ratio

First comparison   Second comparison   Third comparison   Fourth comparison

FIG. 7

Initial operation duration     Certain duration     Certain duration     Certain duration    ...

Open project                                       End project    Time

Set initial reference ratio

First comparison   Second comparison   Third comparison   Fourth comparison

FIG. 8

## INTERNATIONAL SEARCH REPORT

| International application No. |
|---|
| **PCT/KR2020/010393** |

### A. CLASSIFICATION OF SUBJECT MATTER

**G06Q 10/06**(2012.01)i; **G06Q 10/10**(2012.01)i

According to International Patent Classification (IPC) or to both national classification and IPC

### B. FIELDS SEARCHED

Minimum documentation searched (classification system followed by classification symbols)

G06Q 10/06; A63F 7/02; G06Q 10/08; G06Q 50/28; G06Q 99/00; G06Q 10/10

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 크라우드소싱(crowdsourcing), 작업자(worker), 검수자(inspector), 비율(rate), 증원(increase), 감원(decrease), 인공지능(intelligence)

### C. DOCUMENTS CONSIDERED TO BE RELEVANT

| Category* | Citation of document, with indication, where appropriate, of the relevant passages | Relevant to claim No. |
|---|---|---|
| Y | KR 10-1984461 B1 (FOODNURI CO., LTD.) 03 September 2019. See paragraph [0036], claims 13-15 and figures 1-2. | 1-15 |
| Y | 컴퍼니비 Company B blog. [Company B Interview] #7 - Crowdworks CEO PARK, Minwoo. 06 August 2018. [online]. [Retrieved on 22 October 2019]. Retrieved from <URL: https://blog.naver.com/companybb/221333735706>. See pages 3-4. | 1-15 |
| A | JP 2019-080751 A (TORAY ENG CO., LTD.) 30 May 2019. See claims 1-4 and figures 1-5. | 1-15 |
| A | JP 2017-162249 A (EDUCATION DESIGN LAB. INC.) 14 September 2017. See claims 1-3. | 1-15 |
| A | US 8554605 B2 (OLESON, David et al.) 08 October 2013. See claims 1-5 and figure 8. | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 November 2020** | **13 November 2020** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2020/010393**

| Patent document cited in search report | | | Publication date (day/month/year) | Patent family member(s) | | | Publication date (day/month/year) |
|---|---|---|---|---|---|---|---|
| KR | 10-1984461 | B1 | 03 September 2019 | None | | | |
| JP | 2019-080751 | A | 30 May 2019 | None | | | |
| JP | 2017-162249 | A | 14 September 2017 | JP | 6298089 | B2 | 20 March 2018 |
| US | 8554605 | B2 | 08 October 2013 | US | 2014-0039985 | A1 | 06 February 2014 |
| | | | | US | 2013-0006717 | A1 | 03 January 2013 |
| | | | | WO | 2013-003861 | A2 | 03 January 2013 |
| | | | | WO | 2013-003861 | A3 | 14 March 2013 |

Form PCT/ISA/210 (patent family annex) (July 2019)